# EUROPEAN PATENT APPLICATION

(11) **EP 1 657 643 A1**
(43) Date of publication of application: **17.05.2006**
(21) Application number: 04732488.4
(22) Date of filing: 12.05.2004
(51) Int. Cl.: G06F 12/00, G06F 17/30, G11B 20/10, G11B 27/00, G11B 27/031, G10L 19/00

(54) **DATA TRANSMISSION/RECEPTION SYSTEM, DATA TRANSMISSION/RECEPTION METHOD, AND RECORDING/REPRODUCTION DEVICE**

(30) Priority: 21.08.2003 JP 2003297362
(71) Applicant: MATSUSHITA ELECTRIC INDUSTRIAL CO., LTD., Kadoma-shi, Osaka 571-8501 (JP)
(72) Inventor: YAMAMOTO, Akihiro, c/o Matsushita El. Ind. Co.,Ltd, Chuo-ku, Osaka-shi, Osaka 540-6319 (JP); IBARAKI, Susumu, c/o Matsushita El. Ind. Co.,Ltd, Chuo-ku, Osaka-shi, Osaka 540-6319 (JP); MORI, Toshiaki, c/o Matsushita El. Ind. Co.,Ltd, Chuo-ku, Osaka-shi, Osaka 540-6319 (JP)
(74) Representative: Pautex Schneider, Nicole Véronique
(86) International application number: PCT/JP2004/006704
(87) International publication number: WO 2005/020076

(57) **Abstract**

An on-vehicle recording/reproduction apparatus (700) of a data transmission/reception system includes: an extraction unit (502) which compares a database file (710) with a received database file (610) and extracts information regarding audio data recorded in a home recording/reproduction apparatus (600) but not recorded in the on-vehicle recording/reproduction apparatus (700); a sending unit which sends the audio data that is recorded in the on-vehicle recording/reproduction apparatus (700) but not recorded in the home recording/reproduction apparatus (600) and which is extracted by the extraction unit (502) to the home recording/reproduction apparatus (600); a delete determination unit (701) which determines whether to copy a song to the home recording/reproduction apparatus (600) or to delete the song from the recording unit (101) of the on-vehicle recording/reproduction apparatus (700) itself, by checking items "copy origin," "copy destination," and "priority level" in the database file (710).

## Description

### Technical Field

The present invention relates to a system which transmits and receives data, and in particular, relates to a data transmission/reception system, data transmission/reception method, and recording/reproduction apparatus which transmit and receive digital data between two recording/reproduction apparatuses.

### Background Art

The mainstream on-vehicle audio system is one in which a Compact Disc (CD) or Minidisc (MD) recorded by a user is brought into a vehicle and music is listened to. In recent years, on-vehicle hard disks have been mounted in vehicles, and accumulation of large amounts of audio data is becoming possible. For methods of saving music to this kind of on-vehicle hard disk, there are i) copying from a semiconductor memory, and ii) in the case where the hard disk is removable, connecting the hard disk to a personal computer (PC) and directly copying the audio data.

Incidentally, there is a technology, called file synchronization, in which respective files stored between two apparatuses are caused to be the same. This technology is used mainly when copying files in the field of PCs, and in particular, is often used between client/server machines to ensure that a client machine and database is in the same status as a server machine and database.

A file synchronization system, which executes file synchronization between individual machines connected via the Internet easily and with high efficiency, and a file, are provided as this kind of file synchronization technology. For example, (Japanese Laid-Open Patent No. 2001-229065).

However, with the file synchronization system in the abovementioned reference, an Internet environment with a stable communication status is assumed. No mention is made with regards to highly-efficient file synchronization in an environment where communications are unstable, such as a vehicle and so on.

In addition, it is assumed that with general file synchronization, the file content of both machines is caused to have exactly the same status. Even if one tries to apply this kind of file synchronization between an on-vehicle recording/reproduction apparatus and a home recording/reproduction apparatus, there are many cases where audio data copying cannot be carried out as desired by the user, considering, for example, that there are many users who listen to differing genres of music depending on whether they are in a vehicle or at home.

### Disclosure of Invention

Accordingly, a goal of the present invention is to provide a data transmission/reception system, data transmission/reception method, and recording/reproduction apparatus able to transmit and receive digital data between two recording/reproduction apparatuses with high efficiency.

To achieve the abovementioned goals, a data transmission/reception system according to the present invention includes a first recording/reproduction apparatus and a second recording/reproduction apparatus which execute recording and reproduction of input data, and which transmits and receives data between the first recording/reproduction apparatus and the second recording/reproduction apparatus, where the first recording/reproduction apparatus has: a first recording unit for recording a digital data group and a first database file which stores information regarding each digital data of the digital data group; an extraction unit that extracts, from the first database file, information regarding digital data which corresponds to digital data which is recorded in the first recording/reproduction apparatus but has been deleted from the second recording/reproduction apparatus by comparing a second database file sent by the second recording/reproduction apparatus with the first database file; and a delete determination unit which determines whether or not to delete the extracted information regarding the digital data and the digital data that corresponds to the extracted information regarding the digital data from the first recording/reproduction apparatus. The second recording/reproduction apparatus has a second recording unit for recording a digital data group and a second database file which stores information regarding each digital data of the digital data group, and a sending unit that sends the second database file to the first recording/reproduction apparatus.

Here, copy origin information indicating where the digital data is copied from and copy destination information indicating where the digital data is copied may be included in the information regarding each digital data stored in the first database file and the second database file, and the extraction unit may extract, based upon the copy origin information and the copy destination information, the information regarding the digital data that corresponds to the digital data recorded in said first recording/reproduction apparatus but deleted from said second recording/reproduction apparatus.

In addition, each information regarding the digital data stored in the first database file and the second database file may further include deletion information which indicates that the digital data has been deleted from the first or the second recording unit, and the extraction unit may extract, based upon the deletion information, the information regarding the digital data that corresponds to the digital data recorded in the first recording/reproduction apparatus but deleted from the second recording/reproduction apparatus.

Through this, in the case where the digital data is deleted by one of the recording reproduction apparatuses, it is possible to specify the digital data deleted by the one recording reproduction apparatus in the other recording reproduction apparatus, and, for example, to determine whether or not to delete based on a user's preference.

In addition, each information regarding the digital data stored in the first database file and the second database file may further include information which indicates a priority level, and the delete determination unit may determine, based on the priority level of the digital data, whether or not to delete the extracted information regarding the digital data and the digital data that corresponds to the extracted information regarding the digital data.

Through this, in the case where the digital data is deleted by one of the recording reproduction apparatuses, it is possible to determine whether or not to delete, based on a user's preference, in the other recording reproduction apparatus.

In addition, each information regarding the digital data stored in the first database file and the second database file may further include information which indicates a priority level, and said delete determination unit may determine, based on the priority level of the digital data, whether or not to delete the digital data that corresponds to the extracted information regarding the digital data.

Through this, in the case where the digital data is deleted by one of the recording reproduction apparatuses, it is possible to determine whether or not to delete, based on a user's preference, in the other recording reproduction apparatus.

Here, the delete determination unit may delete, from said first recording unit, the digital data determined to be deleted, as well as refresh the deletion information in the first database file that corresponds to the deleted digital data.

Through this, it is possible to manage the digital data by deleting only the digital data, leaving information regarding digital data corresponding to the deleted digital data in a first database file.

In addition, copy origin information indicating where the digital data is copied from and copy destination information indicating where the digital data is copied to may be included in the information regarding each digital data stored in the first database file and the second database file; the extraction unit may extract information regarding digital data which corresponds to digital data which is recorded in said first recording/reproduction apparatus but is not recorded in said second recording/reproduction apparatus by comparing the second database file with the first database file. In addition, the first recording/reproduction apparatus may further include a sending unit that sends, to the second recording/reproduction apparatus, the extracted information regarding the digital data and the digital data that corresponds to the extracted information regarding the digital data.

Through this, it is possible to know a copy origin and a copy destination of each digital data, and possible to prevent wasteful copying by copying the digital data deleted by the one recording reproduction apparatus from the other recording reproduction apparatus.

In addition, the sending unit may determine, based on the copy origin information and copy destination information of the digital data, whether or not to send, to the second recording/reproduction apparatus, the extracted information regarding the digital data and the digital data that corresponds to the extracted information regarding the digital data.

Through this, data copying suited to the user's preferences is possible.

In addition, each information regarding the digital data stored in the first database file and the second database file may further include information indicating a priority level, and the sending unit may further determine, based on the priority level information, whether or not to send, to the second recording/reproduction apparatus, the extracted information regarding the digital data and the digital data that corresponds to the extracted information regarding the digital data.

Through this, it is possible to prevent wasteful copying by copying the digital data deleted by the one recording reproduction apparatus from the other recording reproduction apparatus.

In addition, the first recording/reproduction apparatus or the second recording/reproduction apparatus may be installed in a vehicle. Through this, it is possible to easily use digital data recorded in the other recording reproduction apparatus even inside a vehicle.

In addition, the recording/reproduction apparatus according to the present invention is a recording/reproduction apparatus which carries out recording and reproduction of inputted data as well as sending/reception data to and from another apparatus, and includes: a first recording unit for recording a digital data group and a first database file which stores information regarding each digital data of the digital data group; an extraction unit that extracts, from the first database file, information regarding each digital data which corresponds to digital data which is recorded in the recording/reproduction apparatus but has been deleted from the other apparatus, by comparing a received second database file which has stored information regarding each data of the digital data group recorded in the other apparatus with the first database file; and a delete determination unit which determines whether or not to delete the extracted information regarding the digital data and the digital data that corresponds to the extracted information regarding the digital data from the recording/reproduction apparatus.

Through this, in the case where the digital data is deleted in the other apparatus, it is possible to specify the digital data deleted in that apparatus in the recording reproduction apparatus, and, for example, determine whether or not to delete based on the user's preferences.

In addition, a data transmission/reception system according to the present invention includes a first recording/reproduction apparatus and a second recording/reproduction apparatus which execute recording and reproduction of input data, and which transmits and receives data between the first recording/reproduction apparatus and the second recording/reproduction apparatus, where the first recording/reproduction apparatus includes: a first recording unit for recording a digital data group and a first database file which stores information regarding each digital data of the digital data group; an extraction unit that extracts, from the first database file, information regarding digital data which corresponds to digital data which is recorded in the first recording/reproduction apparatus but has been deleted from the second recording/reproduction apparatus, by comparing a second database file sent by the second recording/reproduction apparatus with the first database file; and a request unit which sends, to the second recording/reproduction apparatus, a send request for the second database file that the second recording/reproduction apparatus has, and a send request for the digital data that corresponds to the extracted information regarding the digital data. The second recording/reproduction apparatus includes a second recording unit for recording a digital data group and a second database file which stores information regarding each digital data of the digital data group, and a response unit which sends the second database file, through the send request for the second database file sent from the first recording/reproduction apparatus, and the corresponding digital data, through the send request for the digital data. The information regarding each digital data stored in the first database file and the second database file includes a priority level.

Through this, in the case where there is digital data which exists in the second recording reproduction apparatus but does not exist in the first recording reproduction apparatus, it is possible to efficiently copy the digital data from the second recording reproduction apparatus to the first recording reproduction apparatus, and thus it is possible to transmit and receive digital data between the two recording reproduction apparatuses easily and efficiently.

Here, it is preferable for the request unit to send the send request for the digital data to the second recording/reproduction apparatus with the priority level attached, and for the response unit to send the digital data based on the priority level when sending the digital data, requested through the send request for the digital data, to the first recording/reproduction apparatus. Through this, when sending the digital data to the first recording reproduction apparatus, the digital data can be sent based on a priority level. Therefore, for example, through sending in order of high priority level, it is possible to cause, based on the user's preferences, the digital data to be transmitted/received as quickly as possible, even when communication is interrupted.

In addition, the request unit may determine whether or not to request sending of the digital data corresponding to the extracted information regarding the digital data. Through this, it is possible to determine, based on the priority level, whether or not request sending of the digital data, when requesting the digital data to the second recording reproduction apparatus. Therefore, for example, by not requesting the sending of digital data with a low priority level, digital data which does not fit the user's preferences is not sent/received, and wasteful communication is not carried out.

In addition, the response unit may send the digital data based on the priority level stored in the second database file that corresponds to the digital data, when sending the digital data to the first recording/reproduction apparatus as per the send request for the digital data. Through this, it is possible to send the digital data based on a priority level stored in a second database file, even without sending a priority level when requesting the digital data to the second recording reproduction apparatus. Therefore, for example, it is possible to send the digital data based on the priority level even when sending only information that can identify a song, such as an ID number and the like.

In addition, the first recording/reproduction apparatus may further include a priority level determination unit which determines the priority level of the digital data based on at least one of a reproduction amount of the digital data, a recording date of the digital data, and a user setting. Through this, the user's preferences and the age of the data can be reflected preferentially.

In addition, the priority level determination unit may, based on the amount of available space in the recording unit of the first recording/reproduction apparatus, delete digital data with a low priority level that is recorded in the recording unit.

Through this, the recording unit can be utilized in a useful manner.

In addition, the request unit may execute a send request for the second database file when the power to the first recording/reproduction apparatus is turned on.

Through this, wasteful consumption in the first recording/reproduction apparatus can be prevented.

In addition, the response unit may record at least a part of the digital data to a removable media as per the send request for the digital data sent from the for recording/reproduction apparatus, and the first recording/reproduction apparatus may transfer at least a part of the digital data from the removable media to the recording unit.

Through this, copying can be completed quickly even when there is a large amount of digital data to be copied.

In addition, the extraction unit may extract information regarding digital data that corresponds to digital data which is recorded in the first recording/reproduction apparatus but is not recorded in the second recording/reproduction apparatus by comparing the second database file with the first database file; and the first recording/reproduction apparatus may further include a sending unit which sends the extracted information regarding the digital data and the digital data that corresponds to the extracted information regarding the digital data to the second recording/reproduction apparatus.

Through this, even in the case where there is digital data that exists in the first recording/reproduction apparatus but does not exist in the second recording/reproduction apparatus, it is possible to efficiently copy the digital data from the first recording/reproduction apparatus to the second recording/reproduction apparatus, and possible to execute two-way transmission of the digital data between the two recording/reproduction apparatuses easily and efficiently.

In addition, the second recording/reproduction apparatus may further include a compression unit which compresses the digital data. The information concerning each digital data stored in the first database file and the second database file may include information indicating a data size of the digital data; the request unit may calculate a compression rate based on the data size of the digital data corresponding to the extracted information regarding the digital data and the available space in the recording unit of the first recording/reproduction apparatus, and send a compression instruction which designates the compression rate along with the send request for the digital data to the second recording/reproduction apparatus. The response unit may instruct the compression unit to compress the digital data that corresponds to the send request for the digital data based on the compression instruction that designates the compression rate, and send the compressed digital data to the first recording/reproduction apparatus.

Through this, even when there is little available space in the recording unit of the first recording/reproduction apparatus, it is possible to execute copying according to the amount of available space, and therefore the recording unit can be efficiently utilized.

In addition, the request unit may calculate the compression rate based on the priority level.

Through this, it is possible to change the quality of the digital data according to the user's preferences.

In addition, one or more pieces of moving picture data may be included in the digital data corresponding to the extracted information regarding the digital data, and the first recording/reproduction apparatus may further include a user interface unit for the user to individually select whether or not to include the moving picture data in the send request for the digital data.

Through this, it is possible to copy only selected parts of moving picture data with a large data size, and thus data transmission/reception can be efficiently executed.

In addition, the recording/reproduction apparatus according to the present invention is an recording/reproduction apparatus which executes recording and reproduction of inputted data as well as carrying out sending/reception of data with another apparatus, and includes: a first recording unit for recording a digital data group and a first database file which stores information regarding each digital data of the digital data group; an extraction unit that extracts, from the first database file, information regarding digital data which corresponds to digital data which is recorded in the first recording/reproduction apparatus but has been deleted from the second recording/reproduction apparatus by comparing a second database file sent by the second recording/reproduction apparatus with the first database file; and a request unit which sends, to the second recording/reproduction apparatus, a send request for the second database file that the second recording/reproduction apparatus has, and a send request for the digital data that corresponds to the extracted information regarding the digital data. The information regarding each digital data stored in the first database file and the second database file includes information indicating a priority level.

Through this, in the case where there is digital data that exists in another apparatus and does not exist in the recording/reproduction apparatus, it is possible to efficiently copy the digital data from the other apparatus to the recording/reproduction apparatus.

In addition, the extraction unit may extract information regarding digital data that corresponds to digital data recorded in the recording/reproduction apparatus but not recorded in the other apparatus by comparing the second database file with the first database file, as well as include a sending unit that sends the extracted information regarding the digital data and the digital data the corresponds to the extracted information regarding the digital data to the other apparatus.

In addition, the recording/reproduction apparatus according to the present invention is an recording/reproduction apparatus which executes recording and reproduction of inputted data as well as carrying out sending/reception of data with another apparatus, and includes: a first recording unit for recording a digital data group and a first database file which stores information regarding each digital data of the digital data group; and a response unit which sends the database file as per the send request sent from the other apparatus, and the digital data corresponding to the send request for the digital data, to the other apparatus. The response unit sends the digital data based on a priority level added to the send request for the digital data, when sending the digital data to the other apparatus as per the send request for the digital data.

Through this, in the case where there is digital data that exists in another apparatus and does not exist in the recording/reproduction apparatus, it is possible to efficiently copy the digital data from the recording/reproduction apparatus to the other apparatus.

Note that it is possible to realize the present invention not only as this kind of transmission/reception system, but also as a data transmission/reception method with the characteristic features of this kind of data transmission/reception system as steps, as well as a program which causes a computer to execute those steps. It also goes without saying that it is possible to distribute such a program via a recording medium such as a CD-ROM and a transmission medium such as the Internet.

The above descriptions have made clear that with the data transmission/reception system in the present invention, in the case where digital data is deleted in the one recording/reproduction apparatus, that digital data deleted in the one recording/reproduction apparatus can be specified in the other recording/reproduction apparatus, and whether or not to delete can be defined according to the user's preferences.

Therefore, the practical value of the present invention is extremely high in today's world where machines such as in an on-vehicle recording/reproduction apparatus, a home recording/reproduction apparatus, and so on, which execute transmission and reception of digital data, are increasing.

### Brief Description of Drawings

FIG. 1 is a block diagram showing a configuration of a data transmission/reception system according to the first embodiment of the present invention.
FIGS. 2A and 2B are schematic diagrams showing examples of a database file saved in a recording unit according to the first embodiment of the present invention; FIG. 2A is an example of a database file saved in a recording unit of an on-vehicle recording/reproduction apparatus, and FIG. 2B is an example of a database file saved in a recording unit of an home recording/reproduction apparatus.
FIG. 3 is a flowchart showing an operation of an on-vehicle recording/reproduction apparatus and a home recording/reproduction apparatus according to the first, second, fifth, and sixth embodiments of the present invention.
FIG. 4 is a block diagram showing a configuration of a data transmission/reception system in the second embodiment of the present invention.
FIGS. 5A and 5B are schematic diagrams showing examples of a database file saved in a recording unit according to the second embodiment of the present invention; FIG. 5A is an example of a database file saved in a recording unit of an on-vehicle recording/reproduction apparatus, and FIG. 5B is an example of a database file saved in a recording unit of an home recording/reproduction apparatus.
FIGS. 6A and 6B are schematic diagrams showing examples of a list of information regarding audio data to be copied which is extracted by an extraction unit according to the second embodiment of the present invention; FIG. 6A is a schematic diagram showing an example of a data list in an extracted state, and FIG. 6B is a schematic diagram showing a data list as arranged in order of priority level.
FIG. 7 is a block diagram showing a configuration of a data transmission/reception system according to the second embodiment of the present invention.
FIG. 8 is a flowchart showing an operation of an on-vehicle recording/reproduction apparatus and a home recording/reproduction apparatus according to the third and fourth embodiments of the present invention.
FIG. 9 is a block diagram showing a configuration of a data transmission/reception system according to the fourth embodiment of the present invention.
FIGS. 10A and 10B are schematic diagrams showing examples of a database file saved in a recording unit according to the fourth embodiment of the present invention; FIG. 10A is an example of a database file saved in a recording unit of an on-vehicle recording/reproduction apparatus, and FIG. 10B is an example of a database file saved in a recording unit of a home recording/reproduction apparatus.
FIG. 11 is a flowchart showing a flow of processing of audio data recorded in an on-vehicle recording/reproduction apparatus but not recorded in a home recording/reproduction apparatus, according to the fourth embodiment of the present invention.
FIG. 12 is a flowchart showing a flow of processing of audio data recorded in a home recording/reproduction apparatus but not recorded in an on-vehicle recording/reproduction apparatus, according to the fourth embodiment of the present invention.
FIGS. 13A and 13B are schematic diagrams showing examples of a database file saved in a recording unit according to the fifth embodiment of the present invention; FIG. 13A is an example of a database file saved in a recording unit of an on-vehicle recording/reproduction apparatus, and FIG. 13B is an example of a database file saved in a recording unit of an home recording/reproduction apparatus.
FIG. 14 is a schematic diagram showing one example of a database file saved in a recording unit according to the fifth embodiment of the present invention, and is one example of a database file in the case where a part of audio data has been deleted from the database files shown in FIGS. 13A and 13B.
FIG. 15 is a flowchart showing the flow of a database comparison processing executed after extraction of audio data that does not exist in one recording/reproduction apparatus, according to the fifth embodiment of the present invention.
FIG. 16 is a block diagram showing a configuration of a data transmission/reception system according to the sixth embodiment of the present invention.
FIG. 17 is a flowchart showing a flow of processing of audio data recorded in a home recording/reproduction apparatus but not recorded in an on-vehicle recording/reproduction apparatus, according to the sixth embodiment of the present invention.
FIG. 18 is a block diagram showing a configuration of a data transmission/reception system according to the seventh embodiment of the present invention.
FIG. 19 is a flowchart showing a flow of processing of audio data recorded in an on-vehicle recording/reproduction apparatus but not recorded in a home recording/reproduction apparatus, according to the sixth embodiment of the present invention.

### Best Mode for Carrying Out the Invention

Each embodiment of the present invention is hereafter described with reference to the diagrams.

### (First Embodiment)

In the on-vehicle recording/reproduction apparatus and home recording/reproduction apparatus in the present first embodiment, a data transmission/reception system, which compares database files of audio data and copies audio data lacking in the database file of the on-vehicle recording/reproduction apparatus from the home recording/reproduction apparatus, is described.

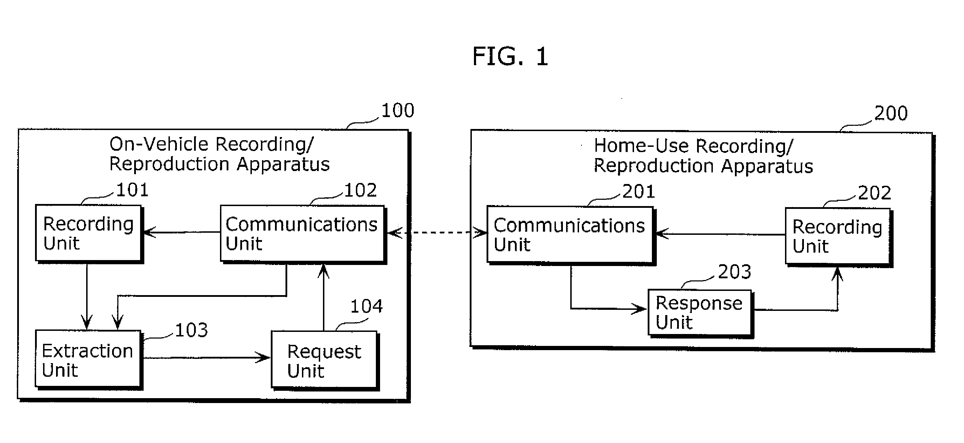

FIG. 1 is a block diagram showing a configuration of a data transmission/reception system according to the first embodiment of the present invention. This transmission/reception system is a system that transmits and receives data between two recording/reproduction apparatuses, and includes an on-vehicle recording/reproduction apparatus 100 and a home recording/reproduction apparatus 200.

The on-vehicle recording/reproduction apparatus 100 includes: a recording unit 101, which is, for example, a high-capacity recording medium such as a hard disk, and which can save a plurality of digital contents such as audio data and video data; a communications unit 102, which executes communications to the exterior via the Internet and so on; an extraction unit 103; and a request unit 104.

On the other hand, the home recording/reproduction apparatus 200 includes: a recording unit 201, which is, for example, a high-capacity recording medium such as a hard disk, and which can save a plurality of digital contents such as audio data and video data; a communications unit 202, which executes communication to the exterior via the Internet and so on; and a response unit 203. Here, the on-vehicle recording/reproduction apparatus 100 and the home recording/reproduction apparatus 200 are assumed to be in a state of communication directly or via a network such as the Internet through the respective communications units 102 and 202.

A plurality of audio data as well as a database file which stores information regarding that audio data are saved in the recording unit 101 and the recording unit 201. Here, the information regarding the audio data is, for example, the artist name, title, recording time, and so on.

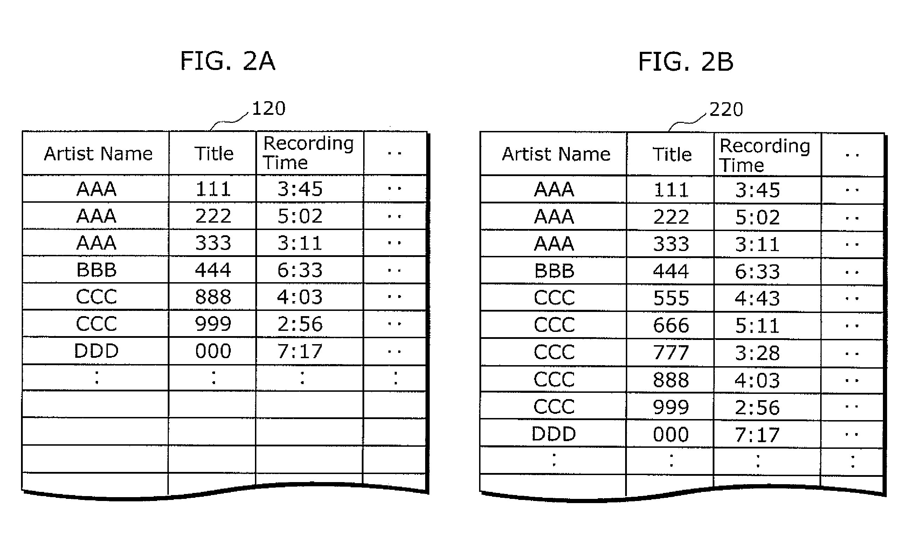

FIGS. 2A and 2B are schematic diagrams showing examples of a database file saved in a recording unit; FIG. 2A is an example of a database file saved in the recording unit 101 of the on-vehicle recording/reproduction apparatus 100, and FIG. 2B is an example of a database file saved in the recording unit 201 of the home recording/reproduction apparatus 200. Here, while the database file is in text so as to simplify descriptions, the actual database file is electronic data. In addition, the case where the information regarding the audio data recorded in the database file is the artist name, title, and recording time is shown as an example.

The information regarding the audio data saved in the on-vehicle recording/reproduction apparatus 100 is stored in a database file 120 per item, such as artist name, title, and recording time, corresponding to each audio data, as shown, for example, in FIG. 2A. On the other hand, the information regarding the audio data saved in the home recording/reproduction apparatus 200 is, in the same manner, stored in a database file 220 per item, such as artist name, title, and recording time corresponding to each audio data, as shown, for example, in FIG. 2B.

In addition, when new audio data is saved in the recording unit 101 or the recording unit 201, the information regarding the newly-saved audio data is newly stored in the database file 120 or the database file 220, and the details are refreshed.

The extraction unit 103 of the on-vehicle recording/reproduction apparatus 100 extracts information regarding the audio data that is recorded in the home recording/reproduction apparatus 200 but not recorded in the on-vehicle recording/reproduction apparatus 100 by comparing the database file 220 sent by the home recording/reproduction apparatus 200 with the database file 120.

When the power to the on-vehicle recording/reproduction apparatus 100 is turned on, the request unit 104 of the on-vehicle recording/reproduction apparatus 100 sends, to the home recording/reproduction apparatus 200 via the communications unit 102, a send request which requests that the home recording/reproduction apparatus 200 sends the database file 220. In addition, the request unit 104 sends, to the home recording/reproduction apparatus 200 via the communications unit 102, a send request which requests sending of the audio data corresponding to the information regarding the audio data as extracted by the extraction unit 103.

The response unit 203 of the home recording/reproduction apparatus sends the database file 220 saved in the recording unit 201 to the on-vehicle recording/reproduction apparatus 100 via the communications unit 202, in response to the send request for the database file 220. In addition, the response unit 203 sends target audio data to the on-vehicle recording/reproduction apparatus 100 via the communications unit 202, in response to the send request which requests sending of the audio data.

Note that the function in which the database file of one's own apparatus is compared with the database file of the partner apparatus and the audio data not existing in one's own apparatus is copied from the partner apparatus is called an audio sync function.

Next, an operation when the on-vehicle recording/reproduction apparatus 100 uses the audio sync function to copy audio data from the home recording/reproduction apparatus 200, in the data transmission/reception system in the above configuration, is described. Here, when the database file 120 and database file 220 as shown in FIGS. 2A and 2B are compared, songs with a title of "555," "666," and "777" are not included in the database file 120. Therefore, these three songs are copied to the on-vehicle recording/reproduction apparatus 100 and registered in the database file 120 when the audio sync function is used.

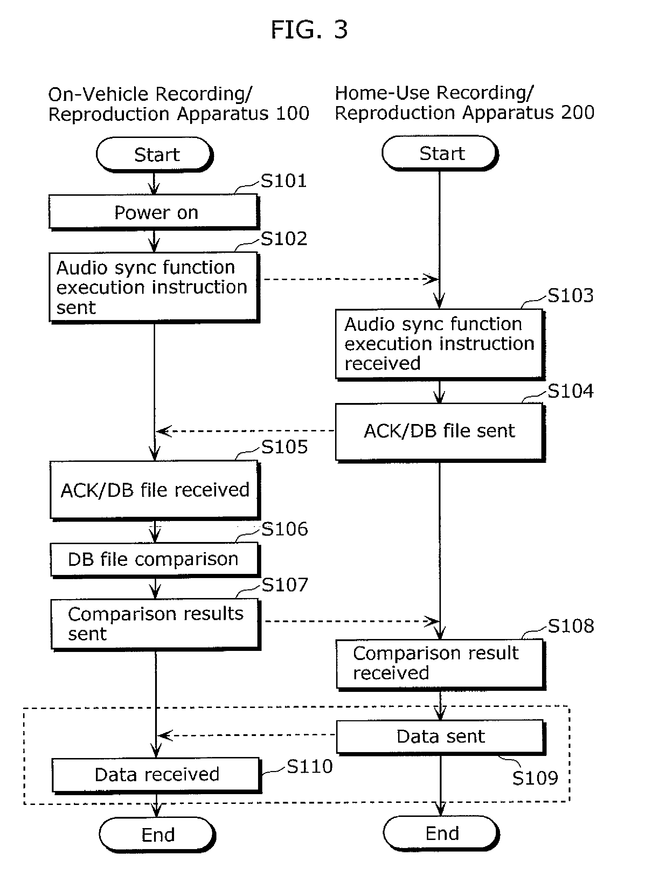

FIG. 3 is a flowchart showing an operation of the on-vehicle recording/reproduction apparatus 100 and the home recording/reproduction apparatus 200 when executing the audio sync function. "DB" in FIG. 3 refers to "database." "DB" refers to "database" in the other diagrams as well. Here, the power to the on-vehicle recording/reproduction apparatus 100 is turned on when the vehicle is started. Power is continuously supplied to the home recording/reproduction apparatus 200, which is always in a state accessible from the exterior.

Note that in the copying of digital data such as audio data, copyright protection is necessary; however, as this is not a main problem of the present invention, a detailed description is omitted. The present invention is assumed as already being in accordance with prepared copyright protection regulations. The present invention is also applicable in standards such as Move and Check-In/Check-Out which do not allow complete copying.

First, the power of the on-vehicle recording/reproduction apparatus 100 is turned on (step S101). Next, the request unit 104 of the on-vehicle recording/reproduction apparatus 100 sends an audio sync function execution instruction to the home recording/reproduction apparatus 200 via the communications unit 102 (step S102). In other words, the request unit 104 sends, to the home recording/reproduction apparatus 200, a send request which requests that the home recording/reproduction apparatus 200 sends the database file 220 to the on-vehicle recording/reproduction apparatus 100.

The home recording/reproduction apparatus 200 receives the audio sync function execution instruction sent by the on-vehicle recording/reproduction apparatus 100 (step S103). Then, the response unit 203 sends an acknowledgement (ACK) and the database file 220 saved in the recording unit 201 to the on-vehicle recording/reproduction apparatus 100 via the communications unit 202 (step S104).

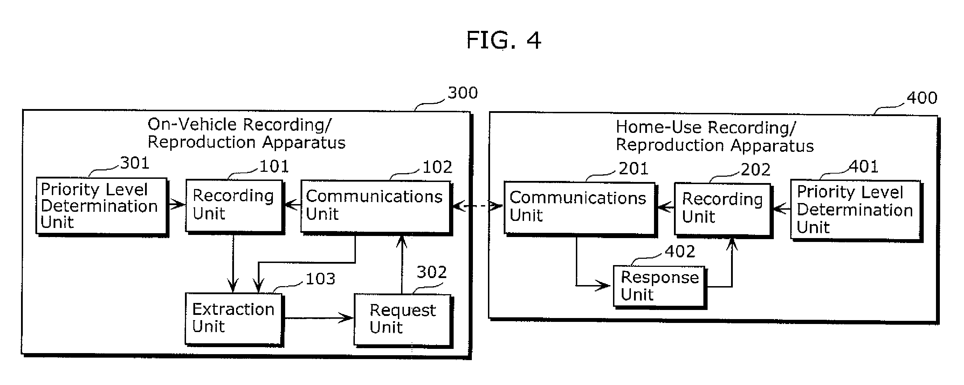

The on-vehicle recording/reproduction apparatus 100 receives the ACK for the audio sync function execution instruction and the database file 220 from the home recording/reproduction apparatus 200 (step S105). Then, the extraction unit 103 compares the database file 220 received from the home recording/reproduction apparatus 200 with the database file 120 saved in the recording unit 201 (step S106). That is, the extraction unit 103 finds whether or not there is audio data which exists in the home recording/reproduction apparatus 200 but does not exist in the on-vehicle recording/reproduction apparatus 100, and, in the case where there is such audio data, extracts information about what audio data does not exist in the on-vehicle recording/reproduction apparatus 100, and notifies the request unit 104. The request unit 104 sends, to the home recording/reproduction apparatus 200 via the communications unit 102, a send request which requests sending of the audio data corresponding to that information; that is, the audio data that does not exist in the on-vehicle recording/reproduction apparatus 100 (step S107). Through this information it is possible for the home recording/reproduction apparatus 200 to know whether or not it is acceptable to copy this audio data to the on-vehicle recording/reproduction apparatus 100. For example, in the example shown in FIG. 4, the songs titled "555," "666," and "777," which exist in the database file 220, are not included in the database file 120. Therefore, the request unit 104 sends information regarding these songs titled "555," "666," and "777" to the home recording/reproduction apparatus 200.

The home recording/reproduction apparatus 200 receives the send request sent by the on-vehicle recording/reproduction apparatus 100 (step S108). The response unit 203 judges what audio data to send to the on-vehicle recording/reproduction apparatus 100 based on this send request, and sends the target audio data to the on-vehicle recording/reproduction apparatus 100 via the communications unit 202 (step S109). For example, in the example shown in FIG. 4, information specifying the songs titled "555," "666," and "777" is attached to the send request. Therefore, the response unit 203 sends the audio data which is the songs titled "555," "666," and "777" to the on-vehicle recording/reproduction apparatus 100.

The on-vehicle recording/reproduction apparatus 100 receives the lacking audio data from the home recording/reproduction apparatus 200 (step S110).

As described above, by comparing the database file 120 of the on-vehicle recording/reproduction apparatus 100 with the database file 220 of the home recording/reproduction apparatus 200, and copying audio data that exists in the home recording/reproduction apparatus 200 but does not exist in the on-vehicle recording/reproduction apparatus 100, the transmission and reception of audio data between the two recording/reproduction apparatuses can be executed easily and efficiently.

Here, data transmission/reception in steps S109 and S110, which are in the dotted line box in FIG. 3, is Carried out in a state where high-speed communication is possible; for example, a Hot Spot. On the other hand, the steps aside from steps S109 and S110 are executed in a state where the on-vehicle recording/reproduction apparatus 100 and the home recording/reproduction apparatus 200 can carry out communication through a wireless LAN such as Institute of Electrical and Electronics Engineers (IEEE) 802.11a, 11b, 11g, and so on, when the vehicle in which the on-vehicle recording/reproduction apparatus 100 is mounted is in a garage at home and so on. In addition, data transmission/reception in steps S109 and S110, in the dotted line box, may be carried out slightly later time-wise, after the home recording/reproduction apparatus 200 has received the send request from the on-vehicle recording/reproduction apparatus 200 as in step S108. In this manner, as long as the comparison of the database files is finished in advance, it is possible to design a data transmission/reception system that realizes an efficient audio sync function, without the vehicle starting late in order to copy data even in the case where a large amount of audio data is received.

Note that the present first embodiment is a description regarding audio data, but the embodiment is not limited to audio data. For example, it is possible to design the same system with video (moving picture) data, picture (still image) data, map data for vehicle navigation, and so on, as long as the data is digital data that can be saved in the recording/reproduction apparatus.

In addition, the present first embodiment is a description with an on-vehicle apparatus and a home apparatus as the recording/reproduction apparatus, but the embodiment is not limited to on-vehicle and home. For example, it is possible to design the same system with a portable recording/reproduction apparatus, as long as two recording/reproduction apparatuses are able to execute communication with one another.

In addition, the present first embodiment assumes that the communications unit 102 and the communications unit 202 of the on-vehicle recording/reproduction apparatus 100 and the home recording/reproduction apparatus 200 respectively carry out communication through a wireless LAN, but the embodiment is not limited to wireless LAN. For example, wireless communication aside from IEEE802.11a, 11b, and 11g are also acceptable. The same system can be designed with wired communication as well.

In addition, the information regarding the audio data in FIGS. 2A AND 2B is the artist name, title, and recording time, but the information is not limited to these, as long as it is information which identifies the song. Furthermore, information which cannot identify a song when used alone, such as genre, may also be included.

In addition, the power of the on-vehicle recording/reproduction apparatus 100 is assumed to be turned on when the engine is started, but the embodiment is not limited to this. For example, the same system can be designed as a configuration that includes a secondary battery, in which power is supplied from a battery as well as charging the secondary battery when the engine is running, and power is supplied from the secondary battery when the engine is not running.

In addition, the present first embodiment, sending of the audio sync function execution instruction as shown in step S102 of FIG. 3 is described as being carried out by the request unit 104 while the power is on, but the embodiment is not limited to this. For example, an "audio sync" switch can be set in the on-vehicle recording/reproduction apparatus 100, and the request unit 104 can begin processing when that switch is pushed. The database file and command data of this audio sync function execution instruction are of a small size compared to the audio data, and therefore data communication of a cellular phone and so on is also possible, and can also be executed when the vehicle is driving. In the case where power is always supplied to the on-vehicle recording/reproduction apparatus, such as when using the secondary battery as described earlier, it is also acceptable, when the database file of the home recording/reproduction apparatus 200 is refreshed, to execute the audio sync function upon receiving information indicating the database file is refreshed. Or, it is acceptable for an audio sync function execution instruction to be sent from the home recording/reproduction apparatus 200 side. In this case, the following configuration is also acceptable: in the case where the power of the on-vehicle recording/reproduction apparatus is not on, the execution instruction is put out at a set interval; for example, every 1 minute until the ACK is received, and in the case where the ACK is not received, times out after 10 minutes. Or, it is also acceptable for the on-vehicle recording/reproduction apparatus 100 to periodically check whether or not the database file of the home recording/reproduction apparatus 200 is refreshed, and when the database file is refreshed, to send the audio sync function execution instruction. Or, it is also acceptable to interlock with a vehicle navigation apparatus, use a Global Positioning System (GPS), and so on, and manage the positions of the on-vehicle recording/reproduction apparatus 100 and the home recording/reproduction apparatus 200, and send the audio sync function execution instruction when a pre-determined distance has been approached. In addition, the same system can be designed even when the processes after sending the audio sync function execution instruction, such as sending the database file and comparing the database file, are executed by the opposite recording/reproduction apparatuses as shown in the present first embodiment.

In addition, in the present first embodiment, information regarding the audio of the lacking audio data is sent in step S107 of FIG. 3, but the embodiment is not limited to this; it is also acceptable only the information that makes it possible to identify a song, such as, for example, an ID number (included in the database file).

In addition, in the present first embodiment, the data transmission/reception in steps S109 and S110, which are in the dotted line box in FIG. 3, are executed in a state where high-speed communication is possible, such as in, for example, a Hot Spot; however, the embodiment is not limited to this. For example, when returning home and so on, the operations up to sending the send request for the audio data not existing in the on-vehicle recording/reproduction apparatus 100 to the home recording/reproduction apparatus 200, as in step S107, are executed, and the target audio data is recorded into a removable media in the home recording/reproduction apparatus 200. Then, it is acceptable for the user to bring the removable media into his/her vehicle the next time he/she goes out, and copy the target audio data from the removable media to the on-vehicle recording/reproduction apparatus 100. Or, it is also acceptable to transmit and receive audio data through a wireless LAN in the same manner as the steps aside from steps S109 and S110. Or, the same system can be designed combining the removable media with a different wireless communication.

### (Second Embodiment)

In the present second embodiment, a data transmitting and reception system, as with the data transmission/reception system described in the first embodiment, and which further uses a priority level as information regarding audio data, is described.

FIG. 4 is a block diagram showing a configuration of a data transmission/reception system according to the second embodiment of the present invention. This data transmission/reception system includes an on-vehicle recording/reproduction apparatus 300, in which a priority level determination unit 301 is added to the configuration of the on-vehicle recording/reproduction apparatus 100 of the first embodiment, and a home recording/reproduction apparatus 400, in which a priority level determination unit 401 is added to the configuration of the home recording/reproduction apparatus 200 of the first embodiment. Note that the same numbers are given to the parts that are the same as in the first embodiment, and detailed descriptions are omitted.

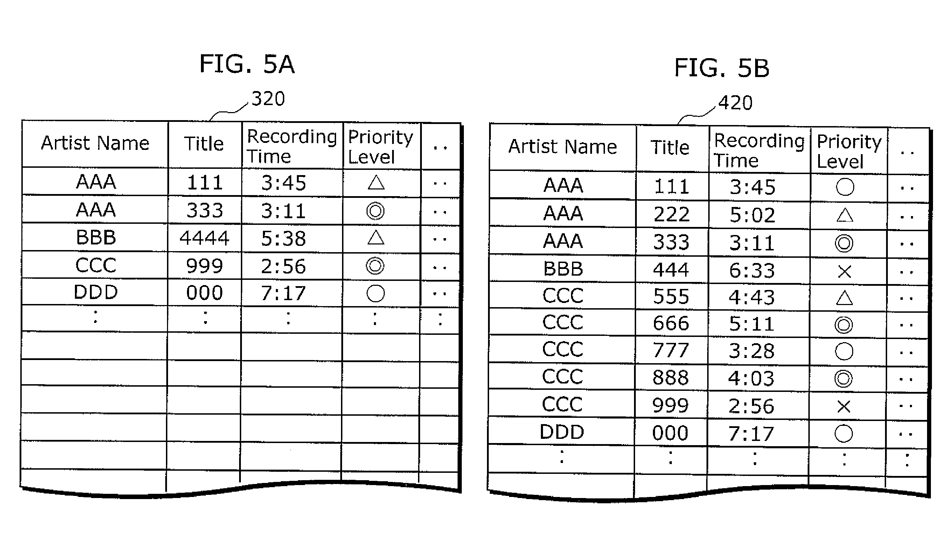

FIGS. 5A and 5B are schematic diagrams showing examples of database files saved in a recording unit according to the second embodiment of the present invention; FIG. 5A is an example of a database file saved in a recording unit 101 of the on-vehicle recording/reproduction apparatus 300, and FIG. 5B is an example of a database file saved in a recording unit 201 of the home recording/reproduction apparatus 400.

Database files 320 and 420 shown in FIGS. 5A and 5B differ from the database files 120 and 220 shown in FIGS. 2A and 2B in that they have an item "priority level" added. In the example shown in FIGS. 5A and 5B, the priority is represented with the four types, "double circle," "circle," "triangle," and "x," with "double circle" having the highest priority level, going down in order to "x," which has the lowest priority level. The priority level determination unit 301 and priority level determination unit 401 in each recording/reproduction apparatus assigns this priority level based on the frequency that a user listens to a song. The priority level determination unit 301 and priority level determination unit 401 determine priority levels in the following manner: for example, in one month, a song listened to more than 20 times is "double circle"; a song listened to more than 10 times but less than 20 times is "circle"; a song listened to more than 5 times but less than 10 times is "triangle"; and a song listened to less than 5 times is "x." Furthermore, the priority level determination unit 301 and priority level determination unit 401 record the number of times a song is listened to in the respective database files 320 and 420, and refresh the priority levels (not shown in FIG. 4).

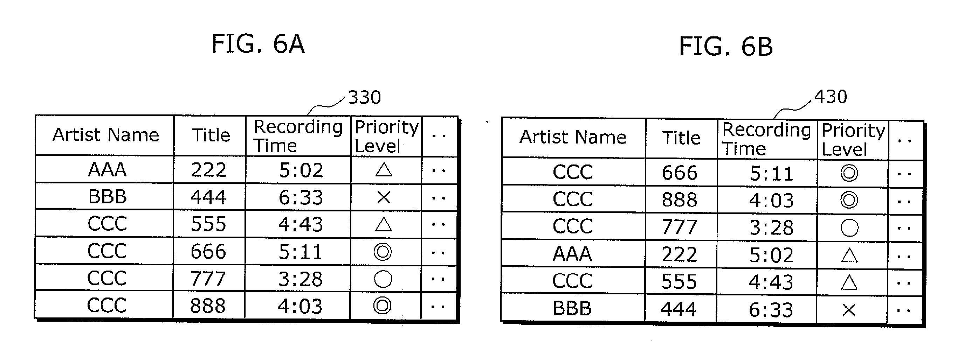

In the second embodiment, the operation of the on-vehicle recording/reproduction apparatus 300 and the home recording/reproduction apparatus 400 when the audio sync function is executed is basically the same as the operation explained in the first embodiment, and is shown in the flowchart in FIG. 3. The points in which the data transmission/reception system in the second embodiment differs from the data transmission/reception system in the first embodiment are described hereafter. FIG. 6A is a list of information regarding audio data extracted by the extraction unit 103 and included in the database file 420 but not included in the database file 320, and FIG. 6B is a data list that has the items of the data list 330 in order of priority level, from high to low.

In the present second embodiment, when the request unit 302 of the on-vehicle recording/reproduction apparatus 300 executes a send request for the audio data which does not exist in the on-vehicle recording/reproduction apparatus 300, as in step S107, the request unit 302 adds priority level information and sends, as shown in FIG. 6A.

In addition, the response unit 203 of the home recording/reproduction apparatus 400 arranges the list of information regarding the audio data received with the send request, as in step S109, in order of priority level, from high to low, as shown in FIG. 6B. Then, the response unit 203 sends the audio data corresponding to the order in which this arranging was executed to the on-vehicle recording/reproduction apparatus 100 via the communications unit 202.

In the above manner, a priority level is given to the audio data, and the audio data with a high priority level is copied first. Through this, even if it is not possible to copy all the audio data to be copied before the vehicle starts, it is possible to give preference to and copy the audio data with a high priority level. Copying of songs with a high priority level, that is, songs the user likes, is completed through a wireless LAN before the vehicle starts, and the remaining songs that have a low priority level are downloaded at a Hot Spot while in transit. Therefore, the audio sync function can be executed efficiently.

Note that in the present second embodiment, the priority level is represented with "double circle," "circle," "triangle," and "x," but the embodiment is not limited to these. For example, the priority level may be represented with numbers such as "1," "2," "3," and "4." In addition, the same system can be designed even if there are more or less than 4 priority level steps.

In addition, the priority level is determined by the frequency that a song is listened to in the span of one month, but the embodiment is not limited to this. For example, the period may be set to more or less than one month, and the priority level step division based on the number of times a song is listened to may have different number values than those shown in the present second embodiment. In addition, it is acceptable to decide the priority level based on a recorded date and time, setting, for example, higher priority for newer songs. Or, it is also acceptable to pre-register a genre the user likes, and assign the priority level by automatically identifying the genre. The same system can also be designed with the user arbitrarily setting the priority level.

In addition, copying of the songs with a high priority level is completed over a wireless LAN, and the remaining songs with a low priority level are downloaded at a Hot Spot while in transit, but the embodiment is not limited to this. For example, it is also acceptable to complete copying of the songs with a low priority level if there is time before the vehicle starts, and even in the case where that copying is interrupted, the remainder can be downloaded at a Hot Spot while in transit. Or, it is also acceptable to download all of the audio data while in transit, in the case where there is not enough time to copy even the songs with a high priority level, as in the first embodiment. In such a case, as there is a priority level, the songs with a high priority level are downloaded at a first Hot Spot, and the remaining songs are downloaded at the next Hot Spot, and so on. Through this, efficient downloading can be executed.

In addition, all the audio data not existing in the on-vehicle recording/reproduction apparatus 300 is downloaded, but the embodiment is not limited to this. For example, it is acceptable not to download the songs with a low priority level. In such a case, the on-vehicle recording/reproduction apparatus 300 may notify the home recording/reproduction apparatus 400 of up until what priority level songs will be downloaded, or this may be set in advance.

In addition, in the present second embodiment, when the request unit 302 executes a send request for the audio data, as in step S107, the priority level information stored in the database file 420 is added as-is and sent, but the embodiment is not limited to this. For example, the request unit 302 may alter the sent priority level based on information of genre and so on registered in advance.

In addition, in the present second embodiment, the request unit 302 adds and sends priority level information when the send request for the audio data is executed, as in step S107, but the embodiment is not limited to this. For example, it is also acceptable for the request unit 302 to send only information enabling identification of a song, such as an ID number (assumed to be included in the database file), and for the response unit 203 to read out and use the priority level of that song from the database file 420 based on this information.

### (Third Embodiment)

In the present third embodiment, a data transmission/reception system in which two-way downloading of audio data is executed between an on-vehicle recording/reproduction apparatus and a home recording/reproduction apparatus, is described.

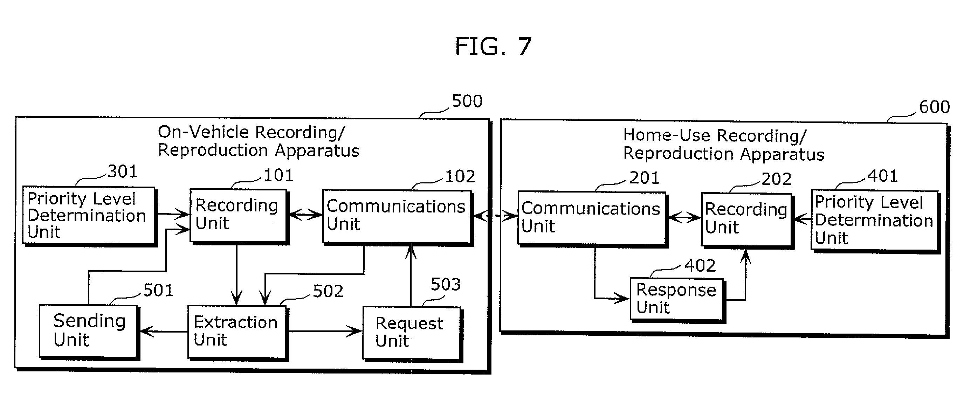

FIG. 7 is a block diagram showing a configuration of a data transmission/reception system according to the third embodiment of the present invention. This data transmission/reception system includes an on-vehicle recording/reproduction apparatus 500, in which a sending unit 501 is added to the configuration of the on-vehicle recording/reproduction apparatus 300 of the second embodiment. Note that the same numbers are given to the parts that are the same as in the first embodiment, and detailed descriptions are omitted. In addition, the on-vehicle recording/reproduction apparatus 500 has a database file 320, and the home recording/reproduction apparatus 600 has a database file 420, as shown in FIG. 5.

An extraction unit 502 of the on-vehicle recording/reproduction apparatus 500 compares the database file 420 sent by the home recording/reproduction apparatus 600 with the database file 320, and extracts information regarding audio data recorded in the home recording/reproduction apparatus 600 but not recorded in the on-vehicle recording/reproduction apparatus 500, and information regarding audio data recorded in the on-vehicle recording/reproduction apparatus 500 but not recorded in the home recording/reproduction apparatus 600.

The sending unit 501 of the on-vehicle recording/reproduction apparatus 500 sends the audio data extracted by the extraction unit 502 and which exists in the on-vehicle recording/reproduction apparatus 500 but does not exist in the home recording/reproduction apparatus 600 to the home recording/reproduction apparatus 600 via a communications unit 102.

A request unit 503 of the on-vehicle recording/reproduction apparatus 500 sends, in addition to a send request which requests sending of audio data corresponding to information regarding the audio data recorded in the home recording/reproduction apparatus 600 but not recorded in the on-vehicle recording/reproduction apparatus 500, information regarding the audio data recorded in the on-vehicle recording/reproduction apparatus 500 but not recorded in the home recording/reproduction apparatus 600, to the home recording/reproduction apparatus 600 via the communications unit 102.

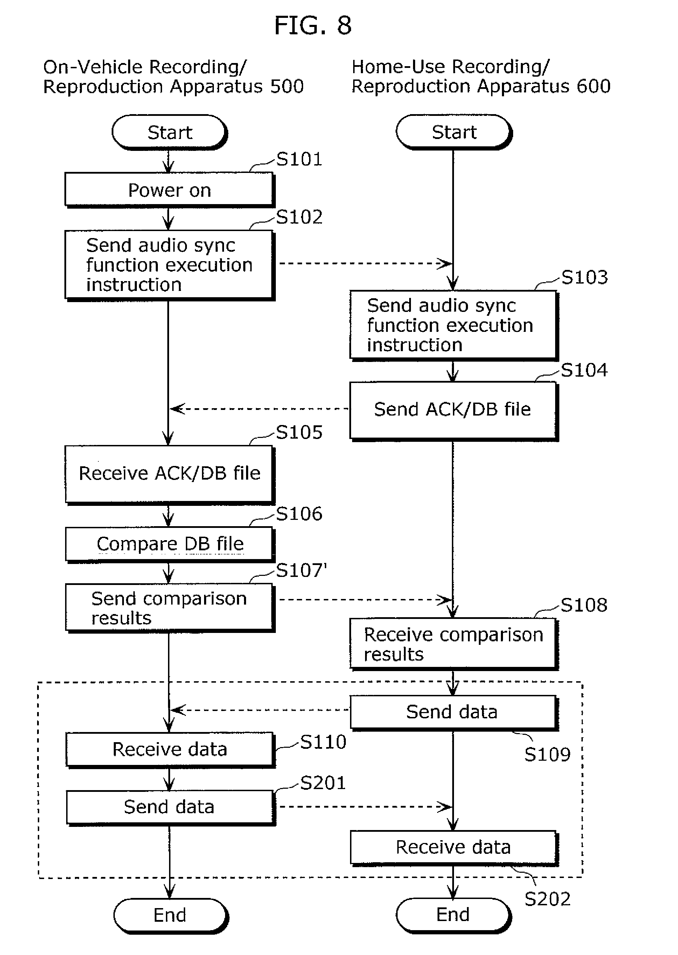

FIG. 8 is a flowchart showing an operation of an on-vehicle recording/reproduction apparatus 100 and a home recording/reproduction apparatus 200 when an audio sync function is executed, according to the third embodiment of the present invention. The points in which the operation of the data transmission/reception system in the third embodiment differs from the operation of the data transmission/reception system in the second embodiment are described hereafter. Note that steps S101 to S106 and S108 to S210, as shown in FIG. 8, are the same as in the second embodiment.

In step S107', the request unit 503 of the on-vehicle recording/reproduction apparatus 500 sends, in addition to a send request for audio data corresponding to information regarding the audio data recorded in the home recording/reproduction apparatus 600 but not recorded in the on-vehicle recording/reproduction apparatus 500, information regarding the audio data recorded in the on-vehicle recording/reproduction apparatus 500 but not recorded in the home recording/reproduction apparatus 600, to the home recording/reproduction apparatus 600 via the communications unit 102. Through this, the home recording/reproduction apparatus 600 obtains information regarding whether or not audio data sent by the on-vehicle recording/reproduction apparatus 500 exists, and in the case where such audio data does exist, what kind of audio data the audio data is. For example, in the case of the database file 320 and the database file 420 shown in FIG. 5, the audio data to be copied, which is saved in the on-vehicle recording/reproduction apparatus 500 but not in the home recording/reproduction apparatus 600, is a song titled "4444" in the database file 320. Therefore, the request unit 503 sends, in addition to a list of information regarding the audio data as shown in FIG. 6A and described in the second embodiment, information regarding the song titled "4444" in the database file 320 to the home recording/reproduction apparatus 600.

In step S201, the sending unit 501 of the on-vehicle recording/reproduction apparatus 500 sends the audio data extracted by the extraction unit 502 and which is recorded in the on-vehicle recording/reproduction apparatus 500 but not recorded in the home recording/reproduction apparatus 600 to the home recording/reproduction apparatus 600 via the communications unit 102. Then, in step S202, the home recording/reproduction apparatus 600 receives the audio data sent by the on-vehicle recording/reproduction apparatus 500 via a communications unit 201. For example, in the case of the database file 320 and the database file 420 shown in FIG. 5, the sending unit 501 sends the audio data of the song titled "4444" in the database file 320 to the home recording/reproduction apparatus 600.

As shown above, through two-way downloading of audio data, it is possible for the on-vehicle recording/reproduction apparatus 500 and the home recording/reproduction apparatus 600 to share audio data newly saved in either of the apparatuses.

Note that the data transmission/reception in step S109 and step S110, which are in the dotted line box in the flowchart shown in FIG. 8, is executed first, and the data transmission/reception in step S201 and step S202 is executed later, but the embodiment is not limited to this temporal relationship. For example, it is acceptable to execute the data transmission/reception processing in step S201 and step S202 first, and execute the data transmission/reception processing in step S109 and step S110 after. Or, it is acceptable to execute data transmission/reception respectively at any time, and possible to design a system which is not limited by a temporal before-and-after relationship.

### (Fourth Embodiment)

In the present fourth embodiment, a data transmission/reception system in which deletion of audio data occurs in one of an on-vehicle recording/reproduction apparatus and a home recording/reproduction apparatus is described.

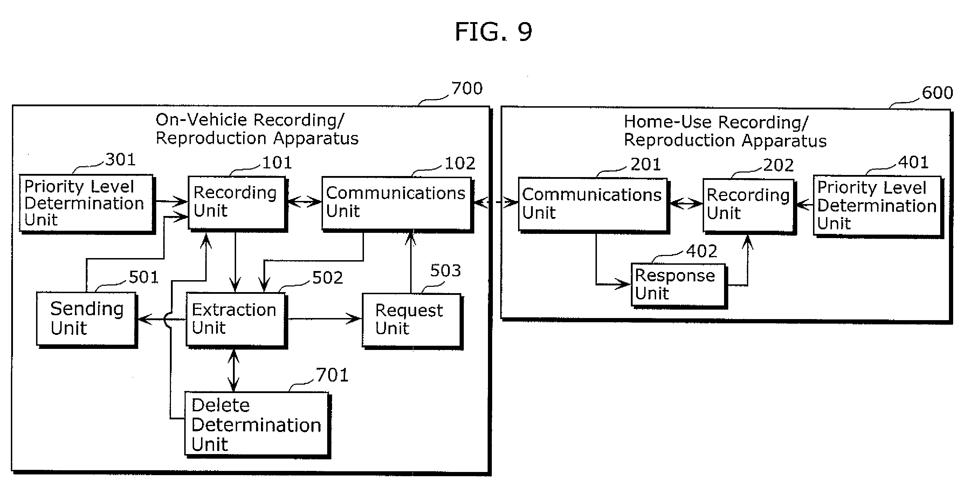

FIG. 9 is a block diagram showing a configuration of a data transmission/reception system according to the fourth embodiment of the present invention. This data transmission/reception system includes an on-vehicle recording/reproduction apparatus 700, in which a delete determination unit 701 is added to the configuration of the on-vehicle recording/reproduction apparatus 500 of the third embodiment. Note that the same numbers are given to the parts that are the same as in the third embodiment, and detailed descriptions are omitted.

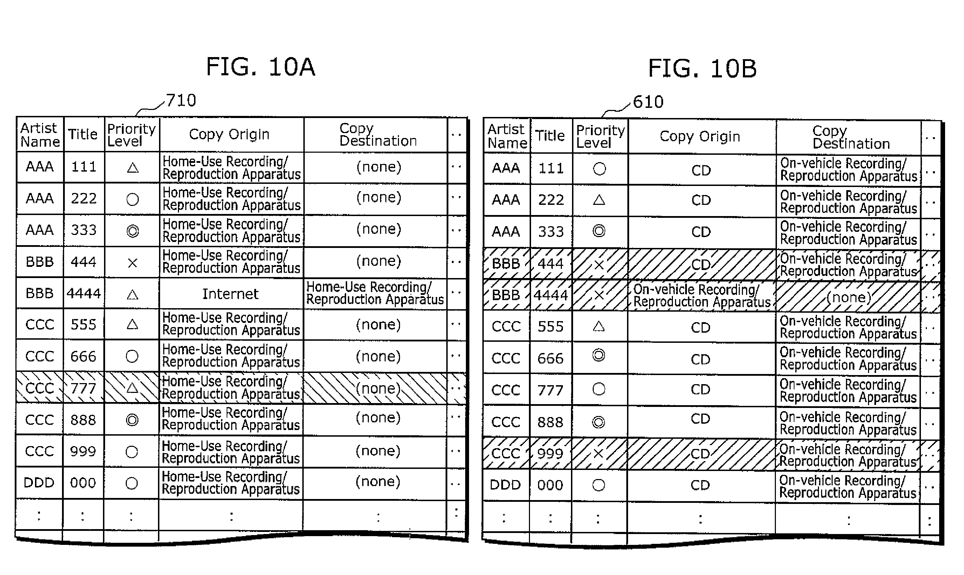

FIGS. 10A and 10B are schematic diagrams showing examples of database files saved in a recording unit; FIG. 10A is an example of a database file saved in a recording unit 101 of the on-vehicle recording/reproduction apparatus 700, and FIG. 10B is an example of a database file saved in a recording unit 201 of a home recording/reproduction apparatus 600. Database files 710 and 610 shown in FIGS. 10A and 10B differ from the database files 320 and 420 shown in FIGS. 5A and 5B in that they have items "copy origin" and "copy destination" added. This "copy origin" is information indicating where audio data is saved from when the audio data is saved, such as, for example, from "CD" or from "Internet" and so on. In addition, "copy destination" is information indicating where audio data is copied to when the audio data is copied, such as, for example, to "on-vehicle recording/reproduction apparatus" or to "home recording/reproduction apparatus" and so on.

In addition, the database files shown in FIGS. 10A and 10B are database files in a state where copying of audio data through an audio sync function has finished, from the state of the database files shown in FIGS. 5A and 5B. As is shown in each embodiment, when the audio sync function is executed, the on-vehicle recording/reproduction apparatus 700 and the home recording/reproduction apparatus 600 hold the same respective database file and audio data.

The delete determination unit 701 of the on-vehicle recording/reproduction apparatus 700 determines whether to copy a song to the home recording/reproduction apparatus 600 or delete the song from the recording unit 101 of the on-vehicle recording/reproduction apparatus 700 itself, by checking the "copy origin," "copy destination," and "priority level" items of the database file 710.

Next, an operation in the case where the audio sync function is executed after deletion of the audio data in the home recording/reproduction apparatus 600, from the state shown in FIGS. 10A and 10B, is executed in the data transmission/reception system configured in the above manner, is described hereafter. Here, the audio data with a priority level of "x"; that is, the hatched area of the database file 610, is deleted.

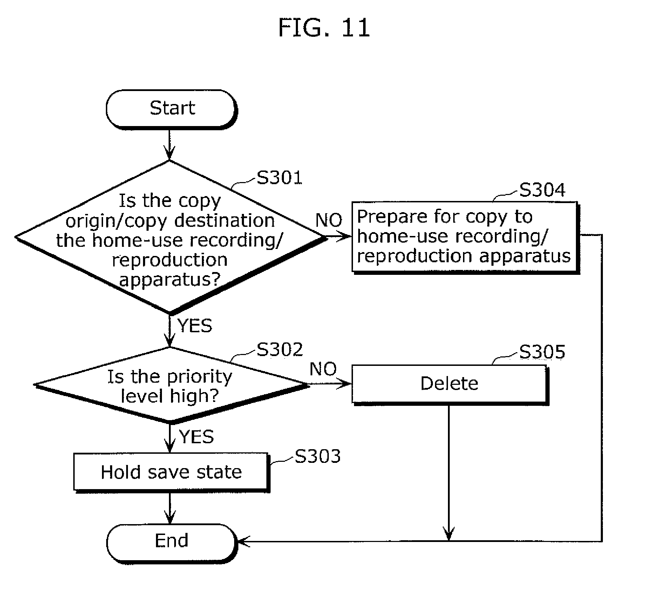

The basic operation is the same as the operation in the third embodiment, and follows the flowchart shown in FIG. 8. In the present fourth invention, in step S106 of FIG. 8, the processing of the audio data which is recorded in the on-vehicle recording/reproduction apparatus 700 but not in the home recording/reproduction apparatus 600 differs from that of the third embodiment. FIG. 11 is a flowchart showing a flow of the processing of the audio data which is recorded in the on-vehicle recording/reproduction apparatus 700 but not in the home recording/reproduction apparatus 600.

The delete determination unit 701 checks the copy origin and copy destination in the database file 710 of a target song; that is, a song extracted by the extraction unit 502 which exists in the database file 710 of the on-vehicle recording/reproduction apparatus 700 but does not exist in the database file 610 of the home recording/reproduction apparatus 600 (step S301). Here, in the case where this copy origin and copy destination are not the home recording/reproduction apparatus 600 (NO of step S301), this means that the song is a song to be newly registered in the home recording/reproduction apparatus 600, and therefore, that the song is a song to be copied is a database comparison result (step S304), and processing ends. After this, the existence of this song, as in step S107' of FIG. 8, is sent along with other information to the home recording/reproduction apparatus 600.

On the other hand, in the case where the copy origin or the copy destination is the home recording/reproduction apparatus 600 (YES of step S301), this means that the song is deleted in the home recording/reproduction apparatus 600. Then, the delete determination unit 701 checks the priority level of the song (step S302). The delete determination unit 701 judges that the priority level is high in the case where the priority level is above a predetermined level, for example, in the case where the priority level is "triangle" or higher; and judges that the priority level is low in the case where the priority level is not above a predetermined level. Here, in the case where the priority level is judged as being high (YES of step S302), this means that the song is judged as being necessary by the on-vehicle recording/reproduction apparatus 700. Because of this, the delete determination unit 701 determines that the song is held as-is (step S303), and the processing ends. On the other hand, in the case where the priority level is judged as being low (NO of step S302), the song is deleted from the home recording/reproduction apparatus 600 as well as being judged as unnecessary to the on-vehicle recording/reproduction apparatus 700. Because of this, the delete determination unit 701 deletes the song (step S305), and the processing ends.

For example, in the case of FIG. 7, songs "444" and "999" deleted from the database file 610 both have a copy origin of "home recording/reproduction apparatus" in the database file 710, and a song "4444" has a copy destination of "home recording/reproduction apparatus"; "444" has a priority level of "x" and is therefore deleted, whereas "4444" has a priority level of "triangle" and "999" has a priority level of "circle" and are therefore held as-is.

In this manner, with regards to a song that exists in the on-vehicle recording/reproduction apparatus 700 but does not exist in the home recording/reproduction apparatus 600, whether to copy the song to the home recording/reproduction apparatus 600 or delete the song from the recording unit 101 of the on-vehicle recording/reproduction apparatus 700 itself is determined by checking the "copy origin," "copy destination," and "priority level" items of the database file 710. By using the database file items of "copy origin," "copy destination," and "priority level" in this manner, even songs seldom listened to at home but frequently listened to in the vehicle are not mistakenly deleted. In addition, it is possible to design a data transmission/reception system that realizes an audio sync function in which wasteful copying of songs that are unnecessary at home is avoided.

Next, an operation in the case where the audio sync function is executed after deletion of the audio data is executed in the on-vehicle recording/reproduction apparatus 700, from the state shown in FIGS. 10A and 10B, is hereafter described. Here, the audio data of song "777"; that is, the hatched area of the database file 710, is deleted.

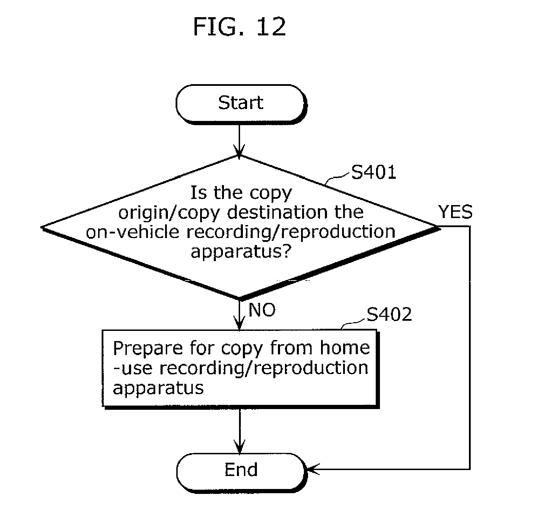

The basic operation is the same as the abovementioned operation, and follows the flowchart shown in FIG. 8. In S106 of FIG. 8, processing on audio data that is recorded in the home recording/reproduction apparatus 600 but is not recorded in the on-vehicle recording/reproduction apparatus 700 differs from up to the third embodiment. FIG. 12 is a flowchart showing a flow of processing on audio data that is recorded in the home recording/reproduction apparatus 600 but is not recorded in the on-vehicle recording/reproduction apparatus 700.

The delete determination unit 701 checks, in the database file 610, the copy origin and the copy destination of a target song; that is, a song extracted by the extraction unit 502 which exists in the database file 610 of the home recording/reproduction apparatus 600 but does not exist in the database file 710 of the on-vehicle recording/reproduction apparatus 700. Here, in the case where this copy origin and copy destination are not the on-vehicle recording/reproduction apparatus 700 (NO of step S401), this means that the song is a song to be newly registered in the on-vehicle recording/reproduction apparatus 700, and therefore, that the song is a song to be copied is a database comparison result (step S304), and processing ends. After this, in step S107' of FIG. 8, the existence of the song is sent along with other information to the home recording/reproduction apparatus 600.

On the other hand, in the case where the copy origin or the copy destination is the on-vehicle recording/reproduction apparatus 700 (YES of step S401), the song is judged to be deleted in the on-vehicle recording/reproduction apparatus 700, and processing ends.

For example, in the case of FIGS. 10A and 10B, a song "777" deleted in the database file 710 has a copy destination of "on-vehicle recording/reproduction apparatus" in the database file 600, which means that in the past the song was deleted from the on-vehicle recording/reproduction apparatus 700 after being copied from the home recording/reproduction apparatus 600; therefore, the song is not a target for copying.

In this manner, in regards to a song that exists in the home recording/reproduction apparatus 600 but does not exist in the on-vehicle recording/reproduction apparatus 700, whether or not to copy the song to the on-vehicle recording/reproduction apparatus 700 is determined by checking the database file 610 items of "copy origin," "copy destination," and "priority fevel." By using the database file items of "copy origin," "copy destination," and "priority level" in this manner, it is possible to design a data transmission/reception system that realizes an audio sync function which prevents re-copying of a song that was once deleted; that is, a song judged unnecessary in the on-vehicle recording/reproduction apparatus 700.

In the data transmission/reception apparatus which realizes the abovementioned audio sync function, by using the database file items of "copy origin," "copy destination," and "priority level," it is possible to design a data transmission/reception system with high usability for a user, in which processing on a song that exists only in one of the recording/reproduction apparatuses can be decided according to the user's preference.

Note that in the present fourth embodiment, with regards to processing on audio data that is recorded in the home recording/reproduction apparatus 600 but is not recorded in the on-vehicle recording/reproduction apparatus 700, deletion processing for audio data judged to be deleted in the on-vehicle recording/reproduction apparatus 700 is not executed based on the priority level in the home recording/reproduction apparatus 600, but the embodiment is not limited to this. For example, as in the case of processing on audio data that is recorded in the on-vehicle recording/reproduction apparatus 700 but not in the home recording/reproduction apparatus 600, it is also acceptable to execute deletion processing for audio data judged to be deleted in the on-vehicle recording/reproduction apparatus 700 based on the priority level in the home recording/reproduction apparatus 600.

Note that in the present fourth embodiment, database file items "copy origin," "copy destination," and "priority level" are used, but it is also possible to design a system without "priority level." In this system as well, re-copying a song that was deleted once can be prevented.

### (Fifth Embodiment)

A different form of a data transmission/reception system in the case where there is a deletion of audio data in one apparatus, as described in the fourth embodiment, is described in the present fifth embodiment.

A configuration of the system according to the fifth embodiment of the present invention is the same as the configuration shown in FIG. 9.

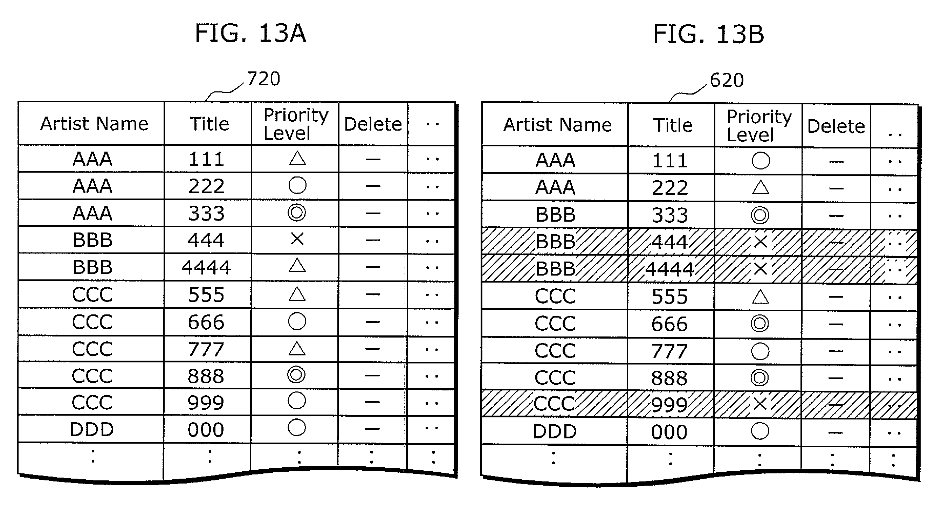

FIGS. 13A and 13B are schematic diagrams showing examples of database files saved in a recording unit; FIG. 13A is an example of a database file saved in a recording unit 101 of an on-vehicle recording/reproduction apparatus 700, and FIG. 13B is an example of a database file saved in a recording unit 201 of an home recording/reproduction apparatus 600. Database files 720 and 620 shown in FIGS. 13A and 13B differ from the database files 320 and 420 shown in FIGS. 5A and 5B in that they have an item "delete" added. The item "delete" means that audio data marked as "circle" is deleted in that apparatus, and while "delete" exists in the database file, no actual audio data exists.

The database files shown in FIGS. 13A and 13B are database files in a state where copying of audio data through an audio sync function has finished, from a state of the database files shown in FIGS. 5A and 5B. That is, the on-vehicle recording/reproduction apparatus 700 and the home recording/reproduction apparatus 600 each hold the same database files and audio data.

A delete determination unit 701 of the on-vehicle recording/reproduction apparatus 700 determines whether to copy a song to the home recording/reproduction apparatus 600 or to delete the song from the recording unit 101 of the on-vehicle recording/reproduction apparatus 700 itself by checking the "delete" and "priority level" items of the database file 720.

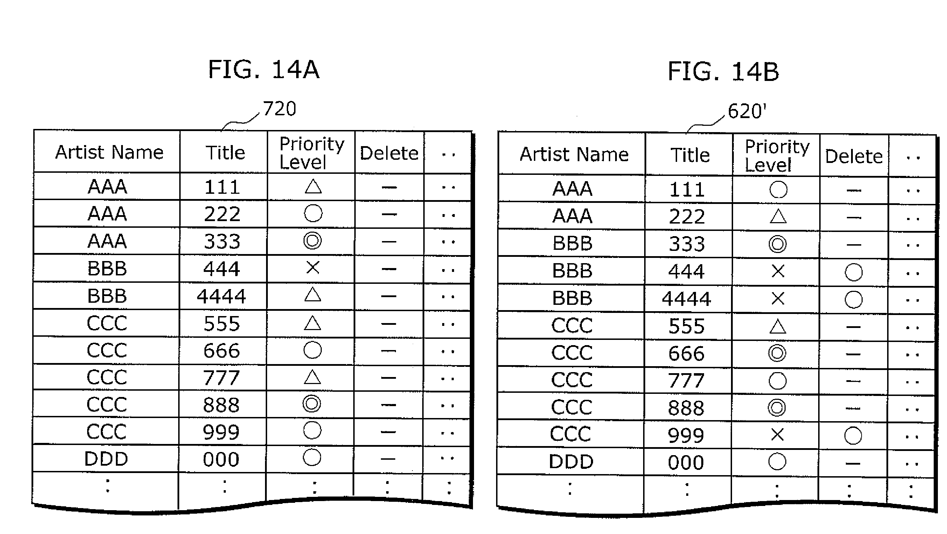

Next, in the data transmission/reception system configured as above, an operation in the case where the audio sync function is realized after audio data is deleted from the home recording/reproduction apparatus 600, from the state shown in FIGS. 13A and 13B, is described hereafter. Here, as in the fourth embodiment, audio data with a priority level of "x"; that is, a hatched area in the database file 620, is deleted, and the post-deletion database file is shown in FIG. 14. As described above, in the database file 620', a song with deleted audio data is marked as "circle" in the "delete" item without being deleted from the database file.

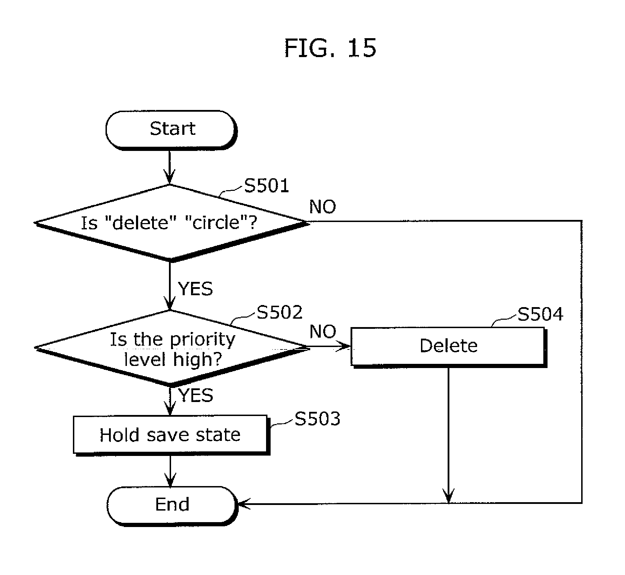

The basic operation is the same as the operation in the fourth embodiment, and follows the flowchart shown in FIG. 8. In the present fifth embodiment, the processing method of the extraction unit 502 in step S106 of FIG. 8 differs. FIG. 15 is a flowchart showing a database comparison processing of the extraction unit 502 which uses the item "delete" in the present fifth embodiment.

Note that the operation shown in FIG. 15 is executed after the database comparison processing described in the third embodiment has ended. In other words, audio data that exists in only one of the on-vehicle recording/reproduction apparatus 700 or the home recording/reproduction apparatus 600 is assumed as already being extracted by the extraction unit 502. While audio data does not exist for a song with "circle" in the item "delete," the song does exist in the database file, and therefore this database comparison processing is not applicable.

FIG. 15 describes the details of the flowchart. First, the extraction unit 502 checks whether or not the "delete" item in the database file 620' is "circle" for each of the songs (step S501). Finally, the extraction unit 502 extracts all songs with "circle" as the item "delete" form the database file 620'. In the case where the item "delete" is not "circle" (NO of step S501), this means that the audio data exists in both the on-vehicle recording/reproduction apparatus 700 and the home recording/reproduction apparatus 600, and therefore processing ends.

On the other hand, in the case where the item "delete" is "circle" (YES of step S501), the delete determination unit 701 checks, in the database file 720, the priority level of a target song; that is, a song extracted by the extraction unit 502 and which has "circle" as the item "delete" (step S502). In the case where the priority level is above a pre-determined level, for example, above "triangle," the priority level is judged to be high, and in the case where the priority level is not above the pre-determined level, the priority level is judged to be low. Here, in the case where the priority level is judged to be high (YES of step S502), this means that the song is judged as being necessary to the on-vehicle recording/reproduction apparatus 700. Therefore, the delete determination unit 701 determines the song is held as-is (step S503), and the processing ends. On the other hand, in the case where the priority level is judged to be low (NO of step S502), the song is deleted from the home recording/reproduction apparatus 600 as well as being judged to be unnecessary to the on-vehicle recording/reproduction apparatus 700. Therefore, the delete determination unit 701 deletes the song (step S504) and the processing ends.

For example, in the case of FIG. 14, a song "444," with "circle" as the item "delete" in the database file 620', has a priority level of "x" in the database file 720, so the item "delete" in the database file becomes "circle," and the audio data is deleted. "4444" and "999" have a priority level of "triangle" or above in the database file 720 and are therefore held as-is.

In this manner, for a song that exists in the on-vehicle recording/reproduction apparatus 700 but is deleted in the home recording/reproduction apparatus 600, whether or not to delete the song from the recording unit 101 of the on-vehicle recording/reproduction apparatus 700 is determined by checking the "delete" and "priority level." By using the database file items "delete" and "priority level" in this manner, songs that are not normally listened to at home but often listened to in the vehicle are not accidentally deleted. In addition, it is possible to design a data transmission/reception system which realizes an audio sync function in which songs not necessary at home are not wastefully copied.

Next, the case where the audio sync function is executed after deletion of audio data is executed in the on-vehicle recording/reproduction apparatus 700, from the state shown in FIGS. 13A and 13B, is described. In this case, while the audio data does not exist in the on-vehicle recording/reproduction apparatus 700, information of the deleted song remains in the database file, so even when database comparison is executed, the song is not extracted as a target for copying by the extraction unit 502. In addition, as mentioned in the fourth embodiment, in the case such as where a user wishes to delete the deleted song from the home recording/reproduction apparatus 600 as well, it is acceptable to check the priority level in the home recording/reproduction apparatus 600 and determine whether or not to delete the song.

As described above, with a data transmission/reception system which realizes the audio sync function, it is possible to design a data transmission/reception system with high usability for the user, in which re-copying of deleted songs is prevented by using the database file items "delete" and "priority level," or by causing the deletion to be reflected in the other recording/reproduction apparatus.

Note that in the present fifth embodiment, the database file items "delete" and "priority level" are used, but it is also possible to design a system without using "priority level." Re-copying of a song deleted once can also be prevented in such a system.

### (Sixth Embodiment)

In the present sixth embodiment, a data transmission/reception system, as in the data transmission/reception system described in the second embodiment, but which takes into account the available space in a recording unit of an on-vehicle recording/reproduction apparatus, is described.

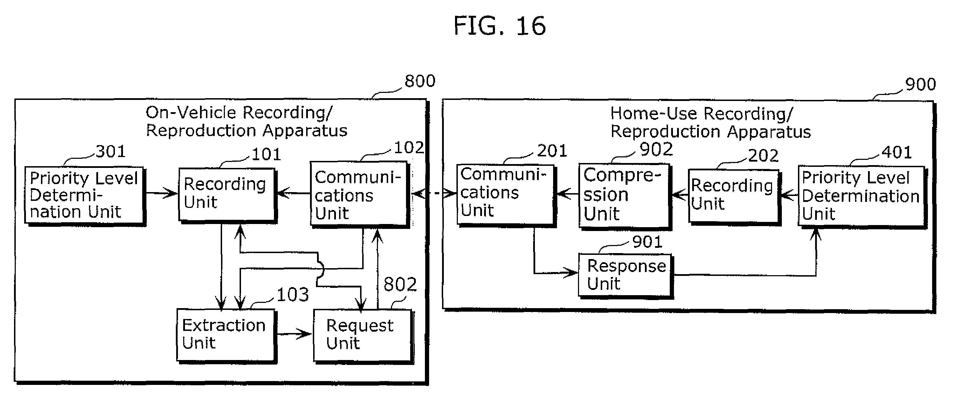

FIG. 16 is a block diagram showing a configuration of a data transmission/reception system according to the sixth embodiment of the present invention. This data transmission/reception system includes a home recording/reproduction apparatus 900, in which a compression unit 902 is added to the configuration of the home recording/reproduction apparatus 400 of the second embodiment. Note that the same numbers are given to the parts that are the same as in the second embodiment, and detailed descriptions are omitted.

When executing a send request for audio data corresponding to information regarding audio data recorded in the home recording/reproduction apparatus 900 but not recorded in the on-vehicle recording/reproduction apparatus 800, a request unit 802 of the on-vehicle recording/reproduction apparatus 800 determines whether or not to execute an audio data compression instruction based on the size of the audio data and the available space in a recording unit 102.

A response unit 901 of the home recording/reproduction apparatus 900 sends the compression instruction to the compression unit 902 based on whether or not the compression instruction is included in the send request for the audio data. When sending the audio data saved in a recording unit 202 to the on-vehicle recording/reproduction apparatus, the compression unit 902 of the home recording/reproduction apparatus 900 compresses the audio data.

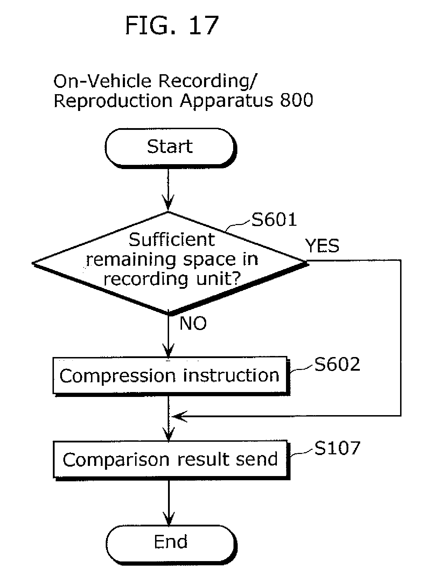

The operation of the on-vehicle recording/reproduction apparatus 800 and the home recording/reproduction apparatus 900 when the audio sync function of the present sixth invention is executed is basically the same as the operations described in the second embodiment, and is represented in the flowchart shown in FIG. 3. Differences between the operation of the data transmission/reception system in the present sixth embodiment and the operation of the data transmission/reception system in the second embodiment are described below. FIG. 17 is a flowchart showing a flow of processing of audio data recorded in the home recording/reproduction apparatus 900 but not recorded in the on-vehicle recording/reproduction apparatus 800. Note that the data size of each audio data is included in a database file.

In the case where information regarding audio data extracted by an extraction unit 103 and recorded in the home recording/reproduction apparatus 900 but not recorded in the on-vehicle recording/reproduction apparatus 800 exists, the request unit 802 of the on-vehicle recording/reproduction apparatus 800 checks the size of the audio data and the amount of available space in the recording unit 102 (step S601). Here, in the case where there is sufficient available space in the recording unit 102 to copy the audio data (YES of step S601), an audio data send request (comparison result send) is executed, in the same manner as the second embodiment (step S107).

On the other hand, in the case where there is not sufficient available space in the recording unit 102 to copy the audio data (NO of step S601), the request unit 802 requests a compressibility based on the space necessary for copying of the audio data and the available space in the recording unit 102, and determines a compression instruction (step S602). Then, the request unit 802 sends the audio data send request (comparison result send), in the same manner as in the second embodiment, as well as the compression instruction, to the home recording/reproduction apparatus 900 (step S107).

The response unit 901 of the home recording/reproduction apparatus 900 checks whether or not the received audio data send request includes the compression instruction. As a result, in the case where the compression instruction is included, the response unit 901 instructs the compression unit 902 to compress the audio data. In the case where the compression instruction is not included, the response unit 901 instructs the compression unit 902 not to compress the audio data. The compression unit 902 compresses and sends the audio data when there is the compression instruction, and sends the audio data without compression when instructed not to compress.

In this manner, it is possible to design a data transmission/reception system which uses the recording unit 102 efficiently by taking into account the available space in the recording unit 102 and determining whether or not to compress audio data, or, in the case of compression, what compressibility to use.

Note that the present embodiment describes the case, based on the second embodiment, where audio data recorded in the home recording/reproduction apparatus 900 but not recorded in the on-vehicle recording/reproduction apparatus 800, but the embodiment is not limited to this. In the case such as the third embodiment in which two-way copying is executed, a configuration in which, for example, the available space in the recording unit 202 of the home recording/reproduction apparatus 900 is sent when the database file is sent, and the audio data sent from the on-vehicle recording/reproduction apparatus 800 is compressed by the compression unit 900, is also acceptable.

In addition, in the present embodiment, the compression unit is set only in the home recording/reproduction apparatus 900 side, but it is possible to design the same system even with a configuration in which a compression unit is also set in the on-vehicle recording/reproduction apparatus 800 side. In such a case, it is acceptable to judge whether or not to execute compression in the home recording/reproduction apparatus based on the comparison results received from the on-vehicle recording/reproduction apparatus 800, and send the compression instruction to the on-vehicle recording/reproduction apparatus 800.

In addition, in the present embodiment, whether or not to execute compression is judged from the data size of the audio data to be copied and the available space in the recording unit, but the embodiment is not limited to this. For example, the user may set the compressibility in advance. Or, it is acceptable to alter the compressibility according to the priority level; for example, no compression on audio data with a high priority level, and compression on audio data with a low priority level. In addition, the same system can be designed even when deleting audio data with a priority level below a pre-determined threshold to increase the available space.

### (Seventh Embodiment)

In the first through the sixth embodiments, a data transmission/reception system, in which audio data is an example of digital data, is described. In the present seventh embodiment, a data transmission/reception system, in which the digital data transmitted and received includes two or more kinds of differing content, is described.

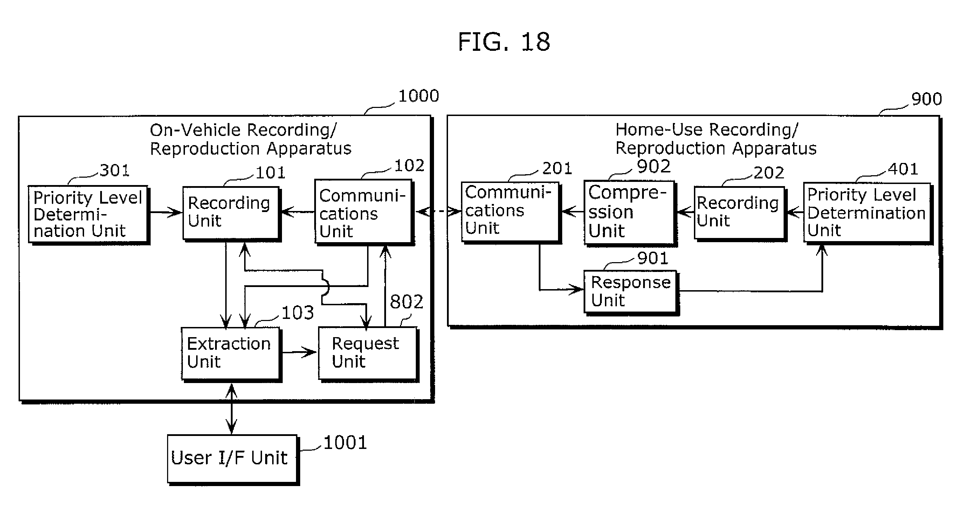

FIG. 18 is a block diagram showing a configuration of the data transmission/reception system according to the seventh embodiment of the present invention. In this data transmission/reception system, an on-vehicle recording/reproduction apparatus 1000 is configured of the on-vehicle recording/reproduction apparatus 800 of the fifth embodiment connected with a user I/F unit 1001. Note that the same numbers are given to the parts that are the same as in the fifth embodiment, and detailed descriptions are omitted.

A function referred to as an audio sync function in the first through the sixth embodiments is called a digital contents sync function, and expresses a function which executes transmission and reception of various digital contents data, such as video (moving picture) data, picture (still image), and so on, in addition to audio data. Here, the case where digital data, in which audio data and video data are mixed, is transmitted and received, is described as an example. Here, the data size of the video data is extremely large as compared to the audio data.

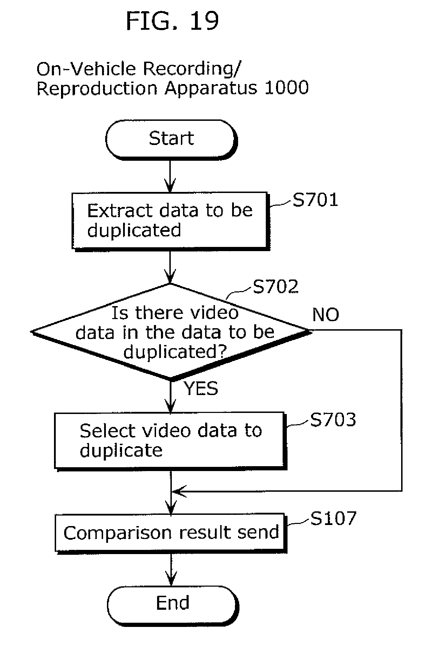

The operation of the on-vehicle recording/reproduction apparatus 1000 and the home recording/reproduction apparatus 900 when the digital contents sync function of the present seventh invention is executed is basically the same as the operations shown in the flowchart shown in FIG. 3. In the present sixth embodiment, a processing of digital contents data recorded in the on-vehicle recording/reproduction apparatus 1000 but not recorded in the home recording/reproduction apparatus 900, as in step S106 of FIG. 3, differs from that of the fifth embodiment. FIG. 19 is a flowchart showing a flow of the processing of the digital contents data recorded in the on-vehicle recording/reproduction apparatus 1000 but not recorded in the home recording/reproduction apparatus 900.

An extraction unit 1002 of the on-vehicle recording/reproduction apparatus 1000 extracts information regarding the digital contents data recorded in the home recording/reproduction apparatus 900 but not recorded in the on-vehicle recording/reproduction apparatus 100, as in the first through the sixth embodiments (step S701). Then, the extraction unit 1002 checks whether or not video data exists in the extracted digital contents data to be copied (step S702). Here, in the case where video data exists (YES of step S702), a list of the extracted digital contents data to be copied is outputted to the user I/F unit 1001. The digital contents data to be copied is selected from this list by a user. The extraction unit 1002 notifies a request unit 802 of the information regarding the selected digital contents data, and executes a send request (comparison result send) for the digital contents data, in the same manner as in each embodiment (step S107). Through this, only the selected digital contents data is copied.

On the other hand, in the case where video data does not exist (NO of step S702), this means, in the present embodiment, that the data to be copied is only audio data, and the request unit 802 executes a send request (comparison result request) for the audio data, in the same manner as each embodiment (step S107).

In the above manner, it is possible to design a data transmission/reception system in which data transmission/reception is executed efficiently, by copying only data selected by the user, rather than copying all the data, for video data which has a large data size.

Note that in the present seventh embodiment, the mixed digital contents data is video data and audio data, but the embodiment is not limited to this. For example, picture data, other digital contents data, and so on may be used in the same manner. In addition, it is possible to design the same system even in the case where there are more than two kinds of data in the mixed digital contents data.

In addition, whether or not to copy the video data is decided based on the user's selection, but the embodiment is not limited to this. For example, it is acceptable for the user to select the audio data as well. In addition, it is acceptable to decide whether or not to select the data based on the file size of the data, the status of the transmission line, and so on. Or, the same system can be designed where the video data is, in the same manner as the audio data, determined to be copied through the method described in the first to the sixth embodiments.

### Industrial Applicability

As mentioned above, a data transmission/reception system according to the present invention is useful for easily and efficiently executing data transmission/reception between two recording/reproduction apparatuses; for example, executing data transmission/reception between an on-vehicle recording/reproduction apparatus and a home recording/reproduction apparatus.

## Claims

1. A data transmission/reception system comprised of a first recording/reproduction apparatus and a second recording/reproduction apparatus which execute recording and reproduction of input data, and which transmits and receives data between said first recording/reproduction apparatus and said second recording/reproduction apparatus,
wherein said first recording/reproduction apparatus includes:
a first recording unit for recording a digital data group and a first database file which stores information regarding each digital data of the digital data group;
an extraction unit operable to extract, from the first database file, information regarding digital data which corresponds to digital data which is recorded in said first recording/reproduction apparatus but has been deleted from said second recording/reproduction apparatus, by comparing a second database file sent by said second recording/reproduction apparatus with the first database file;
a delete determination unit operable to determine whether or not to delete the extracted information regarding the digital data and the digital data that corresponds to the extracted information regarding the digital data from said first recording/reproduction apparatus, and
wherein said second recording/reproduction apparatus includes:
a second recording unit for recording a digital data group and a second database file which stores information regarding each digital data of the digital data group; and
a sending unit operable to send the second database file to said first recording/reproduction apparatus.

2. The data transmission/reception system according to Claim 1,
wherein copy origin information indicating where the digital data is copied from and copy destination information indicating where the digital data is copied to are included in the information regarding each digital data stored in the first database file and the second database file, and
said extraction unit is operable to extract, based upon the copy origin information and the copy destination information, the information regarding the digital data that corresponds to the digital data recorded in said first recording/reproduction apparatus but deleted from said second recording/reproduction apparatus.

3. The data transmission/reception system according to Claim 2,
wherein said delete determination unit is operable to determine to delete all extracted information regarding the digital data and the digital data that corresponds to the extracted information regarding the digital data.

4. The data transmission/reception system according to Claim 2,
wherein information which indicates a priority level is further included in each information regarding the digital data stored in the first database file and the second database file, and
said delete determination unit is operable to determine, based on the priority level of the digital data, whether or not to delete the extracted information regarding the digital data and the digital data that corresponds to the extracted information regarding the digital data.

5. The data transmission/reception system according to Claim 1,
wherein each information regarding the digital data stored in the first database file and the second database file further includes deletion information which indicates that the digital data has been deleted from said first or said second recording unit, and
said extraction unit is operable to extract, based upon the deletion information, the information regarding the digital data that corresponds to the digital data recorded in said first recording/reproduction apparatus but deleted from said second recording/reproduction apparatus.

6. The data transmission/reception system according to Claim 5,
wherein said delete determination unit is operable to delete all the digital data that corresponds to the information regarding the extracted digital data.

7. The data transmission/reception system according to Claim 5,
wherein information indicating a priority level is further included in each information regarding the digital data stored in the first database file and the second database file, and
said delete determination unit is operable to determine, based on the priority level of the digital data, whether or not to delete the digital data that corresponds to the information regarding the extracted digital data.

8. The data transmission/reception system according to Claim 6 or Claim 7,
wherein said delete determination unit is operable to delete, from said first recording unit, the digital data determined to be deleted, as well as to refresh the deletion information in the first database file that corresponds to the deleted digital data.

9. The data transmission/reception system according to Claim 1,
wherein copy origin information indicating where the digital data is copied from and copy destination information indicating where the digital data is copied to are included in the information regarding each digital data stored in the first database file and the second database file;
said extraction unit is operable to extract information regarding digital data which corresponds to digital data which is recorded in said first recording/reproduction apparatus but is not recorded in said second recording/reproduction apparatus, by comparing the second database file with the first database file, and
said first recording/reproduction apparatus further includes a sending unit operable to send, to said second recording/reproduction apparatus, the extracted information regarding the digital data and the digital data that corresponds to the extracted information regarding the digital data.

10. The data transmission/reception system according to Claim 9,
wherein said sending unit is operable to determine, based on the copy origin information and copy destination information of the digital data, whether or not to send, to said second recording/reproduction apparatus, the information regarding the extracted digital data and the digital data that corresponds to the information regarding the extracted digital data.

11. The data transmission/reception system according to Claim 10,
wherein information indicating a priority level is further included in each information regarding the digital data stored in the first database file and the second database file, and
said sending unit is further operable to determine, based on the priority level information, whether or not to send, to said second recording/reproduction apparatus, the extracted information regarding the digital data and the digital data that corresponds to the extracted information regarding the digital data.

12. The data transmission/reception system according to Claim 1,
wherein said first recording/reproduction apparatus or said second recording/reproduction apparatus is installed in a vehicle.

13. A recording/reproduction apparatus which executes recording and reproduction of input data and which transmits and receives data with another apparatus, said recording/reproduction apparatus comprising:
a recording unit for recording a digital data group and a first database file which stores information regarding each digital data of the digital data group;
an extraction unit operable to extract, from the first database file, information regarding digital data which corresponds to digital data which is recorded in said recording/reproduction apparatus but has been deleted from the other apparatus, by comparing a received second database file which has stored information regarding each digital data of the digital data group recorded in the other apparatus with the first database file, and
a delete determination unit operable to determine whether or not to delete the extracted information regarding the digital data and the digital data that corresponds to the extracted information regarding the digital data from said recording/reproduction apparatus.

14. A data transmission/reception method for transmitting and reception data with another apparatus as well as managing recorded data, said method including:
an extraction step for extracting, from the first database file, information regarding digital data which corresponds to digital data which is recorded in the recording/reproduction apparatus but has been deleted from the other apparatus, by comparing a received second database file which has stored information regarding each digital data of the digital data group recorded in the other apparatus with a first database file which has stored information regarding each digital data of the digital data group recorded in the recording/reproduction apparatus; and
a delete determination step for determining whether or not to delete the extracted information regarding the digital data and the digital data that corresponds to the extracted information regarding the digital data.

15. A program for transmitting and receiving data with another apparatus as well as managing recorded data, said program causing a computer to execute:
an extraction step for extracting, from the first database file, information regarding digital data which corresponds to digital data which is recorded in the recording/reproduction apparatus but has been deleted from the other apparatus, by comparing a received second database file which has stored information regarding each digital data of the digital data group recorded in the other apparatus with a first database file which has stored information regarding each digital data of the digital data group recorded in the recording/reproduction apparatus; and
a delete determination step for determining whether or not to delete the extracted information regarding the digital data and the digital data that corresponds to the extracted information regarding the digital data.
